# EUROPÄISCHE PATENTSCHRIFT

(11) **EP 1 139 473 B1**
(45) Veröffentlichungstag und Bekanntmachung des Hinweises auf die Patenterteilung: **16.05.2007**
(21) Anmeldenummer: 01105628.0
(22) Anmeldetag: 07.03.2001
(51) Int. Cl.: H01M 8/04, H01M 8/06

(54) **Brennstoffzellensystem und Verfahren zum Betreiben eines Brennstoffzellensystems**
Fuel cell system and method for operating a fuel cell system
Système de pile à combustible et procédé de fonctionnement d'un système de piles à combustible

(30) Priorität: 29.03.2000 DE 10015653
(43) Veröffentlichungstag der Anmeldung: 04.10.2001
(73) Patentinhaber: NuCellSys GmbH, 73230 Kirchheim/Teck-Nabern (DE)
(72) Erfinder: Gold, Gregor, 89522 Heidenheim (DE); Motzet, Bruno, 73235 Weilheim/Teck (DE); Schäfer, Martin, 73230 Kirchheim/Teck (DE); Schukraft, Andreas, 76199 Karlsruhe (DE); Süss, Alexander, 73277 Owen (DE); Tischler, Alois, 94501 Aidenbach (DE)
(74) Vertreter: Finkele, Rolf

(56) Entgegenhaltungen:
- EP-A- 0 798 798
- EP-A- 0 957 063

## Beschreibung

Die Erfindung betrifft ein Brennstoffzellensystem und ein Verfahren zum Betreiben eines Brennstoffzellensystems gemäß dem Oberbegriff der unabhängigen Ansprüche.

Zur Verdampfung von Medien, etwa Wasser oder Brennstoff, in einem Polymer-Elektrolytmembran-Brennstoffzellensystem sind Verdampfer bekannt, die mit heißem Gas oder einem anderen Wärmeträgermedium wie Thermoöl beheizt werden. Es sind auch direkt beheizte Verdampfer bekannt.

Aus der EP 0 798798 A2 ist ein Brennstoffzellensystem bekannt, das ein aus der Brennstoffzelle stammendes Anodenabgas zusammen mit Frischluft verbrennt, um damit eine Turbine anzutreiben. Die Turbine unterstützt dabei die Verdichtung von frischer Luft für das gesamt Brennstoffzellensystem. Außerdem werden die Abgase nach der Turbine zur Beizung eines Verdampfers genutzt. Die Dampftemperatur wird dabei durch die Zugabe von zusätzlichem Brennstoff zu dem Anodenabgas vor der Turbine geregelt.

Aus der DE-A1 198 52 853 ist ein Brennstoffzellensystem bekannt, bei dem die Abgase einer Brennstoffzelle einen Wärmetauscher beaufschlagen, indem diese einem Zusatzbrenner zugeführt werden oder indem der nicht dem Brenner zugeführte Anteil des Abgasstroms direkt dem Wärmetauscher zugeführt wird.

Der Erfindung liegt die Aufgabe zugrunde, ein Brennstoffzellensystem und ein Verfahren zum Betreiben eines Brennstoffzellensystems anzugeben, bei dem die Nutzung der zur Verfügung stehenden thermischen Energie im Brennstoffzellensystem verbessert ist

Diese Aufgabe wird bei einem gattungsgemäßen Verfahren und einem gattungsgemäßen Brennstoffzellensystem mit den Merkmalen des Anspruchs 1 bzw. 7 gelöst.

Erfindungsgemäß wird in einem Brennstoffzellensystems mit zumindest einer Brennstoffzelle ein Betriebsmittel der Brennstoffzelle in einem Verdampfer mittels katalytischer Verbrennung verdampft, wobei die Dampftemperatur des im Verdampfer zu verdampfenden Betriebsmittels oder die Temperatur eines Wärmeträgermediums des Verdampfers geregelt wird, indem in Abhängigkeit von der Dampftemperatur oder der Wärmeträgermedientemperatur eine Wasserstoffmenge im Anodenabstrom verändert und/oder zustromseits des Verdampfers ein Brennmittel zudosiert wird.

Der besondere Vorteil besteht darin, daß nur die zum Erreichen einer Dampftemperatur notwendige Energie in den Gasstrom über die Variation des Wasserstoffgehalts bzw. der Wasserstoffmenge im Anodenabstrom und/oder über Zugabe von zusätzlichem Brennstoff eingebracht wird. Dadurch werden keine unnötige großen Gasvolumenströme zum Einbringen der Energie in den Verdampfer notwendig, bzw. die Gasvolumenströme sind zumindest bereichsweise frei wählbar.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:

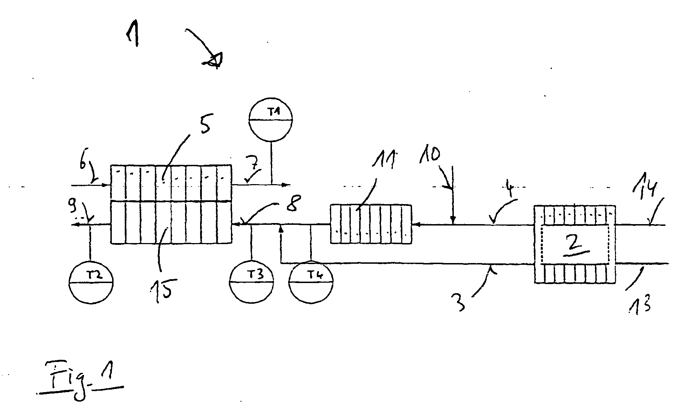

- Fig. 1: eine Prinzipdarstellung einer bevorzugten Vorrichtung zur Durchführung des Verfahrens und

Die Erfindung ist besonders für Brennstoffzellensysteme geeignet, bei denen ein Betriebsmittel der Brennstoffzelle verdampft werden muß, vorzugsweise Methanol und/oder Wasser. Im Brennstoffzellensystem können eine oder mehrere Brennstoffzellen vorgesehen sein, die so verschaltet sind, daß das Brennstoffzellensystem etwa eine zum Betrieb eines Fahrzeugs ausreichende elektrische Leistung zur Verfügung stellen kann.

In Fig. 1 ist eine Prinzipdarstellung einer erfindungsgemäßen Anordnung eines Brennstoffzellensystems 1 auf der Abstromseite der Brennstoffzelle dargestellt. Das Brennstoffzellensystem enthält zumindest eine Brennstoffzelle 2 mit einem Anodenraum und einem Kathodenraum sowie einer ersten Medienzuleitung 13 zur Zufuhr eines ersten Mediums zu dem Anodenraum und einer zweiten Medienzuleitung 14 zur Zufuhr eines zweiten Mediums zu dem Kathodenraum. Die Zustromseite der zumindest einen Brennstoffzelle 2 ist nicht detailliert dargestellt. Vorzugsweise wird Wasserstoff aus einem oder mehreren Edukten, z.B. einem Methanol/Wasserdampfgemisch, durch Reformierung gewonnen und der Brennstoffzelle 2 zugeführt. Es können jedoch auch andere wasserstoffhaltige Edukte verwendet werden. Die Abfuhr eines Anodenabstroms aus dem Anodenraum erfolgt mit einer ersten Medienableitung 3, die Abfuhr eines Kathodenabstroms aus dem Kathodenraum erfolgt über eine zweite Medienableitung 4.

Ein Verdampfer 5 ist mit seiner Heizquelle, einem katalytischen Brenner, in einem Strömungsweg der zumindest einen Brennstoffzelle 2 als Erwärmungseinrichtung angeordnet, so daß zumindest teilweise Brennstoffzellenabgas der stromab der Brennstoffzelle 2 gelegenen Heizquelle des Verdampfers 5 zuführbar ist. Vorzugsweise wird in dem Verdampfer 5 ein wasserstoffhaltiges Edukt oder Gemisch verdampft und einem Gaserzeugungssystem zur Wasserstoffgewinnung aus dem verdampften Edukt oder Gemisch zugeführt. Der gewonnene Wasserstoff wird dann der Brennstoffzelle 2 als Betriebsmittel zugeführt.

Dabei ist der Verdampfer 5 mit einem katalytischen Brenner 15 beheizt. Der Kathodenabstrom 4 und der Anodenabstrom 3 werden gemischt, dem Verdampfer 5 als Reaktionsmedium 8 zugeführt und dort im katalytischen Brenner 15 katalytisch verbrannt. Dabei gibt das Reaktionsmedium 8 Energie an das zu verdampfende Edukt 6 ab und verdampft dieses zumindest teilweise. Aus dem verdampften Edukt 7 wird dann z.B. in einem Reformer Wasserstoff gewonnen und der Brennstoffzelle 2 zugeführt. Das zumindest teilweise umgesetzte Reaktionsmedium 8 wird als Medium 9 aus dem katalytischen Brennerteil 15 des Verdampfers 5 abgeführt. Vorzugsweise ist der Verdampfer 5 mit einem Abstrom der Brennstoffzelle direkt oder mittelbar beheizt. Dabei können Edukt bzw. Gemisch und Brennstoffzellenabgas im Gleichstrom oder auch im Gegenstrom durch den Verdampfer 5 strömen.

Wird bei einem Lastsprung z.B. mehr elektrische Leistung von der Brennstoffzelle 2 gefordert, muß mehr Edukt, vorzugsweise Methanol, dem Gaserzeugungssystem der Brennstoffzelle 2 zudosiert werden. Durch die erhöhte Zufuhr von kaltem, unverdampftem Edukt 6 sinkt die Temperatur im Verdampfer 5, wenn nicht mehr Energie zur Verdampfung und Erzeugung einer ausreichenden Menge des verdampften Edukts 7 bereitgestellt wird.

Bei erhöhtem Energiebedarf kann zustromseits des Verdampfers 5 in den Kathodenabstrom 4 oder auch in das gemischte Reaktionsmedium 8 noch zusätzliches Brennmittel 10, etwa Methanol oder ein anderes geeignetes Medium, zudosiert werden, welches im katalytischen Brenner 15 des Verdampfers 5 zusätzlich Energie zur Verdampfung liefern kann.

Am Ausgang des Verdampfers 5 wird die Dampftemperatur des verdampften Betriebsmittels 7 mit einem Temperatursensor T1 überwacht. Mit den Temperaturwerten des Temperatursensors T1 kann die Dampftemperatur erfindungsgemäß auf eine vorgegebene Temperatur geregelt werden. Vorteilhaft für den Betrieb des Brennstoffzellensystems ist, die Dampftemperatur konstant auf einem vorgegebenen Wert zu halten. Bei Abweichungen von der vorgegebenen Dampftemperatur, die von T1 registriert werden, kann vorteilhaft durch eine Temperaturregelung entsprechend die Wasserstoffmenge im Anodenabstrom 3 verändert werden, um den Verdampfer 5 mehr oder weniger zu heizen und eine vorgegebene Dampftemperatur einzuhalten.

Alternativ kann zu der Variation der Wasserstoffmenge im Anodenabstrom 3 eine entsprechende Menge Brennmittel 10 zusätzlich in den katalytischen Brenner 15 des Verdampfers 5 zudosiert werden. Dies ist vorteilhaft, wenn die Wasserstoffmenge im Anodenabgas nicht ausreicht, um genügend Energie im katalytischen Brenner 15 des Verdampfers 5 bereitzustellen. Die Dosierung des Brennmittels 10 kann in den Brenner 15 erfolgen, in den Kathodenabstrom 4 oder in den gemischten Strom von Kathodenabstrom 4 und Anodenabstrom 3 oder auch in den Anodenabstrom 3.

Zweckmäßig ist, die Brennmittelzugabe so zu dosieren, daß am Ausgang des katalytischen Brenners 15 keine unerwünschten Emissionen oder nicht unzulässig hohe Emissionswerte auftreten.

Alternativ ist es auch möglich, eine gegebene Grundlast des Verdampfers 5 mit einem im wesentlichen konstanten Wasserstoffgehalt im Anodenabgas 3 abzudecken und bei erhöhter Leistungsanforderung an den Verdampfer 5 nur vermehrt zusätzlichen Brennstoff 10 zuzudosieren, um den Leistungsbedarf des Verdampfers 5 zu decken. Die Zudosierung des Brennmittels 10 erfolgt so, daß eine vorgegebene Dampftemperatur bei T1 eingehalten werden kann. Das System kann so einer Laständerung schneller folgen als mit einer Variation des Wasserstoffgehalts im Anodenabstrom 3 alleine.

Es können auch Temperatursensoren T3, T2 vorgesehen sein, um die Eintrittstemperatur und/oder die Austrittstemperatur des in den katalytischen Brenner 15 des Verdampfers 5 eintretenden bzw. aus diesem austretenden Mediums 8 bzw. 9 zu bestimmen.

Im Abstrom der Brennstoffzelle 2 in Fig. 1 kann zusätzlich ein Brenner 11 im Kathodenabstrom 4 vorgesehen sein, der zusätzlichen Brennstoff 10 bereits vor dem Verdampfer 5 katalytisch verbrennt und so das Reaktionsmedium 8 auf eine höhere Temperatur bringt, so daß mehr thermische Energie im katalytischen Brenner 15 des Verdampfers 5 zur Verfügung steht. Ein weiterer Vorteil eines solchen Vorbrenners 11 ist die Verbesserung der Emissionswerte bei einer zusätzlichen Brennmittelzudosierung des Brennmittels 10.

Der Anodenabstrom 3 wird in diesem Fall günstigerweise stromab des Brenners 11 mit dem Kathodenabstrom 4 gemischt. Es kann ein Temperatursensor T4 vorgesehen sein, um die Ausgangstemperatur des Vorbrenners 11 zu überwachen.

Bei der beschriebenen Ausführungsform ohne Vorbrenner 11 wird die Wasserstoffmenge des Anodenabstroms 3 so geregelt, daß immer genug Energie zum Verdampfen des zugeführten Edukts 6 im Verdampfer 5 vorhanden ist. Die Wasserstoffmenge des Anodenabstroms 3 läßt sich z.B. so regeln, daß ein mehr oder weniger großer Wasserstoffüberschuß durch die Brennstoffzelle 2 geschickt wird. Es kann günstig sein, die Wasserstoffmenge des Anodenabstroms 3 im wesentlichen konstant zu halten. In diesem Fall wird die Temperaturregelung der Dampftemperatur oder der Temperatur des katalytischen Brenners 15 des Verdampfers 5 mittels der Zugabe des zusätzlichen Brennstoffs 10 alleine ermöglicht. Dies ist vorteilhaft für die Dynamik. Die Verwendung eines Brenners 11 ist günstig, um unerwünschte Emissionen zu vermeiden.

Besonders günstig ist die Temperaturregelung mit zur Regelung einer vorgegebenen Dampftemperatur über die Variation der Wasserstoffmenge im Anodenabstrom 3 und/oder der Zugabe des Brennstoffs 10 in den Brenner 11. Alternativ ist es auch in dieser Ausführung möglich, die Temperaturdifferenz ΔT₂₋₃ des Wärmeträgermediums 8 zwischen Ausgang und Eingang des Verdampfers 5 mittels der Temperatursensoren T2 und T3 zu erfassen und als Regelgröße für die Temperaturregelung zu verwenden oder auch die Eingangstemperatur bei T3 oder die Ausgangstemperatur bei T2 alleine. Einer bestimmten Menge zu verdampfendes Edukt 6 ist bei konstantem Gasmengenstrom eine bestimmte Temperaturdifferenz ΔT₂₋₃ des Wärmeträgermediums 12 proportional. Aus der Kenntnis der Eduktmenge, die zu verdampfen ist, kann auch aus der Eingangstemperatur des Wärmeträgermediums 8 in den Verdampfer 5 mittels Sensor T3 abgeleitet werden, welche thermische Energie zur Verdampfung benötigt wird und die Eingangstemperatur über die Variation der Wasserstoffmenge im Anodenabstrom 3 und /oder über die Variation der Brennstoffzugabe entsprechend erhöht oder erniedrigt werden.

Vorzugsweise wird bei veränderlichem Gasmengenstrom die Temperaturdifferenz ΔT₂₋₃ des Wärmeträgermediums 8 möglichst konstant gehalten. Dann ergibt sich, daß jeweils eine geeignete Energiemenge zur Verdampfung des Edukts im Verdampfer 5 bereitgestellt wird.

In einer weiteren vorteilhaften Ausgestaltung der Erfindung wird stromab der Brennstoffzelle 2 die Wasserstoffmenge im Anodenabstrom 3 zumindest mittelbar bestimmt. Bei einem Lastsprung ändert sich die Wasserstoffmenge im Abstrom 3 der Anode schnell. Dazu kann ein Wasserstoffsensor im Anodenabstrom 4 vorgesehen sein und/oder ein Sauerstoffsensor, vorzugsweise eine Lambda-Sonde, im Kathodenabstrom 3. Aus einem Signal des Sauerstoffsensors läßt sich der Wasserstoffumsatz in der Brennstoffzelle 2 bestimmen und damit der Wasserstoffgehalt im Anodenabstrom 3. Eine weitere bevorzugte Möglichkeit ist eine Konzentrationsmessung im Abstrom nach der Mischstelle von Anodenabstrom 3 und Kathodenabstrom 4. Eine weitere günstige Möglichkeit besteht in der Bestimmung der Temperatur nach dem Brenner 11 bei T3, die auch die Wasserstoffmenge im Anodenabstrom 3 widerspiegelt. Der Vorteil ist darin zu sehen, daß die Dampftemperatur des verdampften Edukts 7 schneller geregelt werden kann.

Die Vorteile der Erfindung sind darin zu sehen, daß der Systemwirkungsgrad des Brennstoffzellensystems günstig erhöht wird, da die Gasmassenströme auf der Heizseite des Verdampfers 5 deutlich verkleinert werden können.

Bei einer Temperaturregelung über die Variation der Wasserstoffmenge im Anodenabstrom 3 fallen weniger umweltschädliche Emissionen des Systems an, da Wasserstoff im System leichter umzusetzen ist als etwa Methanol als zusätzliches Brennmittel 10, auch entfällt eine zusätzliche Dosierung des Brennmittels 10. Bei fester Wasserstoffmenge im Anodenabstrom 3 und Variation der Zugabe des Brennmittels 10 ist dagegen eine schnellere Regelung der Temperatur des Dampfes und/oder des Wärmeträgermediums möglich. Die Regelung kann unabhängig von der elektrischen Lastanforderung an die Brennstoffzelle 2 erfolgen. Bei Lastsprüngen kann eine schnelle Reaktion erfolgen. Mögliche Emissionen durch die Zugabe des zusätzlichen Brennmittels 10 können durch den Brenner 11 weitgehend vermieden werden. Bei gleicher elektrischer Leistung der Brennstoffzelle 2 kann das gesamte Gaserzeugungssystem des Brennstoffzellensystems kleiner ausgeführt werden.

Die zusätzliche Überwachung der Absolutmenge des Wasserstoffs im Anodenabgas hat den Vorteil einer weiteren Steigerung der Systemdynamik. Ändert sich die Wasserstoffmenge bei einem Lastsprung, kann sehr schnell zusätzlicher Brennstoff 10 direkt in den Brenner 11 und/oder den Brenner 15 zugegeben werden.

## Patentansprüche

1. Brennstoffzellensystem (1) mit zumindest einer Brennstoffzelle (2) mit einem Anodenraum und einem Kathodenraum, einer ersten Medienzuleitung (13) zur Zufuhr eines ersten Mediums (6, 7) zu dem Anodenraum und einer ersten Medienableitung zur Abfuhr eines Anodenabstroms (3) aus dem Anodenraum und einer zweiten Medienzuleitung (14) zur Zufuhr eines zweiten Mediums zu dem Kathodenraum und einer zweiten Medienableitung zur Abfuhr eines Kathodenabstroms (4) aus dem Kathodenraum und einer stromab der zumindest einen Brennstoffzelle (2) angeordneten Erwärmungseinrichtung (5), welche mit einem Brennstoffzellenabstrom (3, 4) der zumindest einen Brennstoffzelle (2) beaufschlagbar ist,
**dadurch gekennzeichnet,**
**daß** die Erwärmungseinrichtung einen Verdampfer (5) umfaßt, **daß** der Verdampfer (5) im Strömungsweg eines Edukts zur Bereitstellung eines Betriebsmittels der zumindest einen Brennstoffzelle (2) angeordnet ist und
**daß** Mittel zur Regelung der Dampftemperatur des im Verdampfer verdampften ersten Mediums (7) auf eine vorgegebene Temperatur oder daß Mittel zur Regelung der Temperatur eines Wärmeträgermediums (8) des Verdampfers auf eine vorgegebene Temperatur vorgesehen sind, wobei der Verdampfer (5) einen katalytischen Brenner (15) als Wärmequelle aufweist.

2. Brennstoffzellensystem nach Anspruch 2,
**dadurch gekennzeichnet,**
**daß** im Kathodenabstrom (4) stromauf des Verdampfers (5) ein katalytischer Brenner (11) vorgesehen ist, der mit dem Brennmittel (10) beaufschlagbar ist.

3. Brennstoffzellensystem nach Anspruch 1 oder 2,
**dadurch gekennzeichnet,**
**daß** im Kathodenabstrom (4) stromauf des katalytischen Brenners (11, 15) eine Zufuhr von Brennmittel (10) vorgesehen ist, welches in Abhängigkeit von der Dampftemperatur oder einer Wärmeträgertemperatur zudosierbar ist.

4. Brennstoffzellensystem nach Anspruch 1,
**dadurch gekennzeichnet,**
**daß** stromab der zumindest einen Brennstoffzelle (2) ein Wasserstoffsensor und/oder ein Sauerstoffsensor angeordnet ist.

5. Verfahren zum Betreiben eines Brennstoffzellensystems (1) mit zumindest einer Brennstoffzelle (2) mit einem Anodenraum und einem Kathodenraum, einer ersten Medienzuleitung (13) zur Zufuhr eines ersten Mediums zu dem Anodenraum und einer ersten Medienableitung zur Abfuhr eines Anodenabstroms (3) vom Anodenraum und einer zweiten Medienzuleitung (14) zur Zufuhr eines zweiten Mediums zu dem Kathodenraum und einer zweiten Medienableitung zur Abfuhr eines Kathodenabstroms (4) vom Kathodenraum und einer stromab der zumindest einen Brennstoffzelle (2) angeordneten Erwärmungseinrichtung (5), welche mit einem Brennstoffzellenabstrom (4, 3) beaufschlagt wird,
**dadurch gekennzeichnet,**
**daß** in einem Verdampfer (5) ein Edukt (6, 7) verdampft wird, wobei die Dampftemperatur des im Verdampfer (5) zu verdampfenden Edukts (6, 7) oder die Temperatur eines Wärmeträgermediums (8) des Verdampfers (5) auf eine vorgegebene Temperatur geregelt wird, indem in Abhängigkeit von der Dampftemperatur oder der Wärmeträgertemperatur eine Wasserstoffmenge im Anodenabstrom (3) verändert und/oder zustromseits des Verdampfers (5) ein Brennmittel (10) zudosiert wird, wobei der Kathodenabstrom (4) und der Anodenabstrom (3) in einem katalytischen Brenner (15) umgesetzt werden und der Verdampfer (5) von dem Brenner (15) beheizt wird.

6. Verfahren nach Anspruch 5,
**dadurch gekennzeichnet,**
**daß** der Kathodenabstrom (4) in einem Brenner (11) umgesetzt wird und der Brennerabstrom (8) und der Anodenabstrom (3) dem Verdampfer (5) zur katalytischen Verbrennung zugeführt werden.

7. Verfahren nach Anspruch 5 oder 6,
**dadurch gekennzeichnet,**
**daß** dem Brenner (11) zusätzlich Brennmittel (10) in Abhängigkeit von der Dampftemperatur oder einer Wärmeträgertemperatur des Verdampfers (5) zugeführt wird.

8. Verfahren nach Anspruch 5,
**dadurch gekennzeichnet,**
**daß** die Wasserstoffmenge im Anodenabstroms (3) zumindest mittelbar bestimmt wird und das Brennmittel (10) in Abhängigkeit von der Wasserstoffmenge zudosiert wird.

## Claims

1. Fuel cell system (1) having at least one fuel cell (2) with an anode area and a cathode area, a first medium supply line (13) for supplying a first medium (6, 7) to the anode area and having a first media outlet line for carrying away an anode outlet flow (3) from the anode area, and having a second medium supply line (14) for supplying a second medium to the cathode area and a second medium outlet line for carrying away a cathode outlet flow (4) from the cathode area, and having a heating device (5) which is arranged downstream from the at least one fuel cell (2) and which can be acted on by a fuel cell outlet flow (3, 4) from the at least one fuel cell (2), **characterized in that** the heating device has a vaporizer (5), **in that** the vaporizer (5) is arranged in the flow path of a reactant for provision of an operating medium for the at least one fuel cell (2), and **in that** means are provided for regulation of the vapour temperature of the first medium (7) which is vaporized in the vaporizer at a predetermined temperature or **in that** means are provided for regulation of the temperature of a heat-carrier medium (8) of the vaporizer at a predetermined temperature, with the vaporizer (5) having a catalytic burner (15) as a heat source.

2. Fuel cell system according to Claim 2, **characterized in that** a catalytic burner (11) to which the fuel (10) can be applied is provided upstream of the vaporizer (5) in the cathode outlet flow (4).

3. Fuel cell system according to Claim 1 or 2,
**characterized in that** a supply of fuel (10) which can be metered as a function of the vapour temperature or of a heat-carrier temperature is provided upstream of the catalytic burner (11, 15) in the cathode outlet flow (4).

4. Fuel cell system according to Claim 1, **characterized in that** a hydrogen sensor and/or an oxygen sensor is arranged downstream from the at least one fuel cell (2).

5. Method for operation of a fuel cell system (1) having at least one fuel cell (2) with an anode area and a cathode area, having a first medium supply line (13) for supplying a first medium to the anode area and a first medium outlet line for carrying away an anode outlet flow (3) from the anode area, and having a second medium supply line (14) for supplying a second medium to the cathode area and a second medium outlet line for carrying a cathode outlet flow (4) away from the cathode area, and having a heating device (5) which is arranged downstream from the at least one fuel cell (2) and which is acted on by a fuel cell outlet flow (4, 3), **characterized in that** a reactant (6, 7) is vaporized in a vaporizer (5), with the vapour temperature of the reactant (6, 7) which has to be vaporized in the vaporizer (5) or the temperature of a heat-carrier medium (8) of the vaporizer (5) being regulated at a predetermined temperature **in that** the amount of hydrogen in the anode outlet flow (3) is varied as a function of the vapour temperature or of the heat-carrier temperature, and/or a fuel (10) is added on the inlet flow side of the vaporizer (5), with the cathode outlet flow (4) and anode outlet flow (3) being converted in a catalytic burner (15), and with the vaporizer (5) being heated by the burner (15).

6. Method according to Claim 5, **characterized in that** the cathode outlet flow (4) is converted in a burner (11) and the burner outlet flow (8) and the anode outlet flow (3) are supplied to the vaporizer (5) for catalytic combustion.

7. Method according to Claim 5 or 6, **characterized in that** fuel (10) is additionally supplied to the burner (11) as a function of the vapour temperature or of a heat-carrier temperature of the vaporizer (5).

8. Method according to Claim 5, **characterized in that** the amount of hydrogen in the anode outlet flow (3) is determined at least indirectly, and the fuel (10) is added as a function of the amount of hydrogen.

## Revendications

1. Système (1) de cellules à combustible qui présente au moins une cellule à combustible (2) dotée d'une chambre d'anode et d'une chambre de cathode, une première amenée de fluide (13) qui apporte un premier fluide (6, 7) à la chambre d'anode et une première évacuation de fluide qui évacue un écoulement (3) de sortie d'anode hors de la chambre d'anode, une deuxième amenée de fluide (14) qui amène un deuxième fluide à la chambre de cathode et une deuxième évacuation de fluide qui évacue un écoulement (4) de sortie de cathode hors de la chambre de cathode, ainsi qu'un dispositif de chauffage (5) disposé en aval de la ou des cellules à combustible (2) et apte à être alimenté par un écoulement (3, 4) de sortie de la ou des cellules à combustible (2),
**caractérisé en ce que**
le dispositif de chauffage comporte un évaporateur (5),
**en ce que** l'évaporateur (5) est disposé dans le parcours d'écoulement d'un produit en vue de préparer un agent d'alimentation de la ou des cellules à combustible (2) et
**en ce que** des moyens sont prévus pour réguler la température de la vapeur du premier fluide (7) évaporé dans l'évaporateur à une température prédéterminée ou en ce que des moyens sont prévus pour réguler la température d'un fluide caloporteur (8) de l'évaporateur à une température prédéterminée, l'évaporateur (5) présentant comme source de chaleur un brûleur catalytique (15).

2. Système de cellules à combustible selon la revendication 2, **caractérisé en ce qu'**un brûleur catalytique (11) qui peut être alimenté en combustible (10) est prévu dans l'écoulement (4) de sortie de cathode en amont de l'évaporateur (5).

3. Système de cellules à combustible selon les revendications 1 ou 2, **caractérisé en ce qu'**un apport de combustible (10) qui peut être ajouté en fonction de la température de la vapeur ou de la température d'un fluide caloporteur est prévu dans l'écoulement (4) de sortie de cathode en amont du brûleur catalytique (11, 15).

4. Système de cellules à combustible selon la revendication 1, **caractérisé en ce qu'**un détecteur d'hydrogène et/ou un détecteur d'oxygène sont disposés en aval de la ou des cellules à combustible (2).

5. Procédé d'utilisation d'un système (1) de cellules à combustible qui présente au moins un cellule à combustible (2) dotée d'une chambre d'anode et d'une chambre de cathode, une première amenée de fluide (13) qui apporte un premier fluide à la chambre d'anode et une première évacuation de fluide qui évacue un écoulement (3) de sortie d'anode hors de la chambre d'anode, une deuxième amenée de fluide (14) qui amène un deuxième fluide à la chambre de cathode et une deuxième évacuation de fluide qui évacue un écoulement (4) de sortie de cathode hors de la chambre de cathode, ainsi qu'un dispositif de chauffage (5) disposé en aval de la ou des cellules à combustible (2) et apte à être alimenté par un écoulement de sortie (3, 4) de la ou des cellules à combustible (2),
**caractérisé en ce qu'**un produit de réaction (6, 7) est évaporé dans un évaporateur (5), la température de la vapeur du produit (6, 7) à évaporer par l'évaporateur (5) ou la température d'un fluide caloporteur (8) de l'évaporateur (5) étant réglées à une température prédéterminée en modifiant la quantité d'hydrogène dans l'écoulement (3) de sortie d'anode en fonction de la température de la vapeur ou de la température du fluide caloporteur et/ou en ajoutant un combustible (10) du côté de l'alimentation de l'évaporateur (5), l'écoulement (4) de sortie de cathode et l'écoulement (3) de sortie d'anode réagissant dans un brûleur catalytique (15) et l'évaporateur (5) étant chauffé par le brûleur (15).

6. Procédé selon la revendication 5, **caractérisé en ce que** l'écoulement (4) de sortie de cathode réagit dans un brûleur (11) et **en ce que** l'écoulement de sortie du brûleur (8) et l'écoulement (3) de sortie d'anode sont apportés à l'évaporateur (5) en vue de leur combustion catalytique.

7. Procédé selon les revendications 5 ou 6, **caractérisé en ce que** du combustible (10) supplémentaire est apporté au brûleur (11) en fonction de la température de la vapeur ou de la température d'un fluide caloporteur de l'évaporateur (5).

8. Procédé selon la revendication 5, **caractérisé en ce que** la quantité d'hydrogène dans l'écoulement (3) de sortie d'anode est déterminée au moins indirectement et **en ce que** le combustible (10) est ajouté en fonction de la quantité d'hydrogène.
